# EUROPEAN PATENT APPLICATION

(11) **EP 2 127 864 A1**
(43) Date of publication of application: **02.12.2009**
(21) Application number: 08157334.7
(22) Date of filing: 30.05.2008
(51) Int. Cl.: B32B 3/18

(54) **Multi-layered structure, product comprising said structure and a method for producing said structure**

(71) Applicant: Jacob Zeilon AB, 181 62 Lidingö (SE)
(72) Inventor: Zeilon, Jacob, 181 62 Lidingö (SE)
(74) Representative: Allee, Harriet Eva Charlotta

(57) **Abstract**

The present invention relates to a multi-layered structure (10; 20) comprising a first and a second continuous outer skin (11; 21), and an intermediate layer (12; 22) adhered to the first and second outer skin (11; 21), said intermediate layer (12; 22) comprises substantially spherical elements (13; 23) arranged between the first and the second outer skin (11; 21) The invention is **characterised in that** the spherical elements (13; 23) at their contact surfaces are bounded to the adjacent spherical element or elements. The present invention furthermore relates to a product comprising the claimed structure and a method for producing said structure.

## Description

### TECHNICAL FIELD OF THE INVENTION

The present invention relates to a multi-layered structure, a product comprising said structure and to a method for producing said structure. In particular, the invention relates to a multi-layered structure for use within the field of furniture and constructions.

### BACKGROUND OF THE INVENTION

There are several different applications in which there is a need for products having a three-dimensional shape with curved and / or straight surface sections, and with different thicknesses in different parts of the product. Such types of products are for example furniture, constructional elements and interior panel sections in cars, aeroplanes etc. There are different ways of producing these products. Traditionally furniture is made of wood, or boards made of wooden fibres, that are machined to the desired shape before the surface is coated with for example paint in the selected colour or a foil that gives the product the desired features and appearance. Due to the characteristics' of wooden materials, it is very difficult to design and build products with complex shapes that are asymmetrical and are able to withstand and remain the desired shape when exposed to different surrounding conditions like changing temperatures, different levels of humidity etc. Furthermore, these wooden materials have a rather high density and consequently products having a design with a considerable element thickness will become very heavy. Furthermore it is very complicated to manufacture products with curved surfaces and different element thicknesses. All these drawbacks will in the end also make them complicated to transport, expensive and difficult to install.

The present invention provides an alternative structure for products, such as furniture, a panel for a car or an aeroplane interior or a constructional element, and a method for producing said product.

### SUMMARY OF THE INVENTION

The present invention, defined by the appended claims, provides a multi-layered structure, a product comprising said structure and a method for producing said structure that reduce the problems described above.

According to a first aspect, the present invention provides a multi-layered structure comprising a first and a second continuous outer skin, and an intermediate layer adhered to the first and second outer skin. The intermediate layer comprises substantially spherical elements arranged between the first and the second outer skin. The spherical elements are at their contact surfaces bounded to adjacent spherical element or elements. The spherical elements provide an intermediate layer with a low density since the spherical elements are bounded to each other only in the area where they are in contact with an adjacent spherical element. The spherical elements bounded together generate a three-dimensional mesh structure that provides sufficient strength and stiffness to the product and keeps the weight of the intermediate layer low. The space defined between the spherical elements is un-filled and no resin is used for filling the space between the spherical elements. The non filling of the space between the spherical elements keeps the weight of the intermediate layer as low as possible and the outer skins provide the structure with a continuous smooth surface.

The multi-layered structure could have an intermediate layer with a thickness between 1 mm and 1000 mm depending on the design of the product it is intended to be used in. The thickness of the structure could be different in different parts of the product and change continuously.

The spherical elements are for example ECCOSPHERE® MINISPHERES Lightweight composite spheres manufactured and sold by TRELLEBORG EMERSON & CUMING, Inc. These spherical elements are substantially hollow, and consequently the density is low. The spherical elements are available in different sizes, and the spherical elements are also adaptable for the conditions in a specific application regarding their ability to withstand external forces like for example pressure or shearing forces.

In one embodiment of the invention the spherical elements have a substantially hollow core surrounded by a layer made of glass fibres cut in small pieces and bounded together by an epoxy resin. The use of epoxy resin provides a strong and reliably bounding between the spherical elements within the intermediate layer.

The spherical elements suitably have a diameter of at least about 1 mm, and preferably at least 2 mm, in order to ensure that the spherical elements are bounded together only at their contact surfaces and a space not filled with adhesive is generated between the spherical elements. Furthermore the diameter of the spherical elements is equal to, or less than the minimum intermediate layer thickness in the structure.

The size of the spherical elements is selected taking due account of the specified thickness of the product and the required structural strength of the product. Larger spherical elements ensure a lower weight of the intermediate layer but will have a negative impact on the strength of the structure since the intermediate layer will contain a mesh with less spherical elements and connecting bounding points within the layer. Furthermore the intermediate layer will contain less material and more air.

In one preferred embodiment of the invention the spherical elements in the intermediate layer have different diameters within the range defined above. The use of spherical elements with different diameters facilitates the spreading of the spherical elements within the intermediate layer which ensure that the spherical element will have the desired distribution within the intermediate layer which may improve the strength of the product.

In one embodiment of the invention, the first and / or the second outer skin comprises an outer foil of a thermoplastic film or a multilayer film that provides the structure with the desired surface appearance, such as roughness, colour, brightness, UV-resistance etc, and a surface that is able to resist scratches and wear.

In one embodiment of the invention the selected type of foil requires that the inside surface of the film is covered by a layer of a primer, such as for example a printing ink or paint, to ensure the desired bounding to the intermediate layer or an adjacent layer.

In another embodiment of the invention, the foil is transparent and a layer with a predetermined pattern, or a layer of wood, is placed inside the foil to give the structure the desired appearance. This embodiment makes it possible to choose the appearance of the product and protect the patterned layer or layer of wood from wear and possible moisture and dirt that in the end would lead to a frayed surface.

In another embodiment of the structure, the first and / or the second skin further comprises a reinforcement layer of a woven or a non-woven mat of fibres, or a tufted mat of fibres placed inside the foil to increase the strength of the skin and the structure. The reinforcement layer also has the advantage of preventing the skin from adopting the shape of the underlying spherical elements in the intermediate layer, normally called "print-through", which could be important for the appearance of the product. Woven mats provide a skin, and consequently also a structure, with a higher strength while a tufted mat of fibres may be better when print-through is very undesirable.

The reinforcement layer is made of for example natural fibres, synthetic fibres, ceramic fibres, metal fibres or structural fibres such as carbon or aramid. The fibre type is selected depending on the required properties of the final structure. Different fibres have different properties, advantages and price. If high structural strength is required, for example carbon fibres or similar fibres with a high strength are selected.

In one embodiment of the multi-layered structure some of the spherical elements are replaced by spherical elements not able to withstand the same pressure as the other spherical elements. This embodiment may be advantageous since the weaker spherical elements will collapse when a pressure is applied during the manufacturing of the structure if the quantity of spherical elements introduced in the intermediate layer is to large and thereby avoid that the structure in the end will have a larger element thickness than intended.

According to a second aspect, the present invention provides a product prepared by use of the multi-layered structure of the invention. The product comprises a multi-layered structure according to the definitions in the claims.

In one embodiment of the present invention, the first and / or the second skin have a curved shape and the intermediate layer has a different thickness in different parts of the product. The fact that products made of a structure according to the present invention could be designed with curved surfaces and different intermediate layer thicknesses in different parts of the product is a very advantageous feature since the structure could be easily adapted to any curved surfaces and different element thicknesses that are requested for a specific product. No matter of the design of the product, the intermediate layer of spherical elements will ensure that the overall weight of the product remain low even though the thickness of the intermediate layer is considerable.

In one embodiment of the present invention, the first and the second skin are bounded together to enclose the intermediate layer. This embodiment is used if it is desired that the skin enclose the intermediate layer completely. If desirable, one or both skins could be extended a distance beyond the termination of the intermediate layer. This is of particular interest if a thin edge of the product is requested.

According to a third aspect, the present invention provides a method for producing a product, comprising the steps of:
- a): positioning and shaping a first skin in a first part of a mould;
- b): positioning and shaping a second skin in a second part of a mould;
- c): applying a layer of adhesive on spherical elements;
- d): introducing a predetermined quantity of spherical elements covered by an adhesive into the first or the second part of the mould;
- e): closing the mould by bringing the first and the second part of the mould together to the relative position that ensures a product with the desired shape and an intermediate layer of spherical elements;
- f): heating the mould to a predetermined temperature to cure the adhesive on the spherical elements thereby bounding the spherical elements in the intermediate layer together and adhering to the first and the second skin; and
- g): removing the final product from the mould.

In another embodiment of the method, step a) and / or step b) of the method, when the skin comprises more than one layer, are replaced by the steps of positioning and shaping a foil, a reinforcement layer and / or a layer with a predetermined pattern in one part of a mould; distributing a resin over the layers and curing the resin to bound the different layers together. This is done before the spherical elements are introduced into the mould to ensure that the different layers within the skin are bounded together in a reliable manner.

If the selected type of skin or foil requires that the inside surface of the skin or foil are covered by a layer of a primer, such as for example a printing ink or paint, to ensure the desired bounding strength between the skin or the foil to the intermediate layer or an adjacent layer, this primer layer could be applied on the skin or foil surfaces either before the skin or the foil is introduced and shaped in the mould or after.

In a preferred embodiment of the method, the resin distributed over the layers is only cured to about 90% and the final curing takes place together with the curing of the adhesive on the spherical elements in step f). By performing the curing of the resin distribute over the layers like this, the overall production time for each product is reduced considerably since the curing of the resin must be completed before the product is removed from the mould to ensure that the product will remain in the intended shape.

In another preferred embodiment of the method a material, that expands when heated to a predetermined temperature, is applied on the inside surface of at least a part of the skin before the first and the second part of the mould are brought together in order to compensate for any shrinking that may occur during the curing of the adhesive and the resin in step f) and thereby ensure that the space between the first and the second skin is filled by the spherical elements and the expanding material.

Further aspects and embodiments will present themselves through the following detailed description and the appended claims.

### BRIEF DESCRIPTION OF THE DRAWINGS

Two embodiments of the claimed invention are illustrated in the appended figures, in which:
Figure 1 is a cross sectional view of a part of a product according to the invention.
Figure 2 is a second cross sectional view of a part of a product according to a second embodiment of the invention.
Figure 3 is an illustration of a method of manufacturing a product according to the invention.
Figure 4 is an illustration of a second embodiment of a method of manufacturing a product according to the invention.

### DETAILED DESCRIPTION

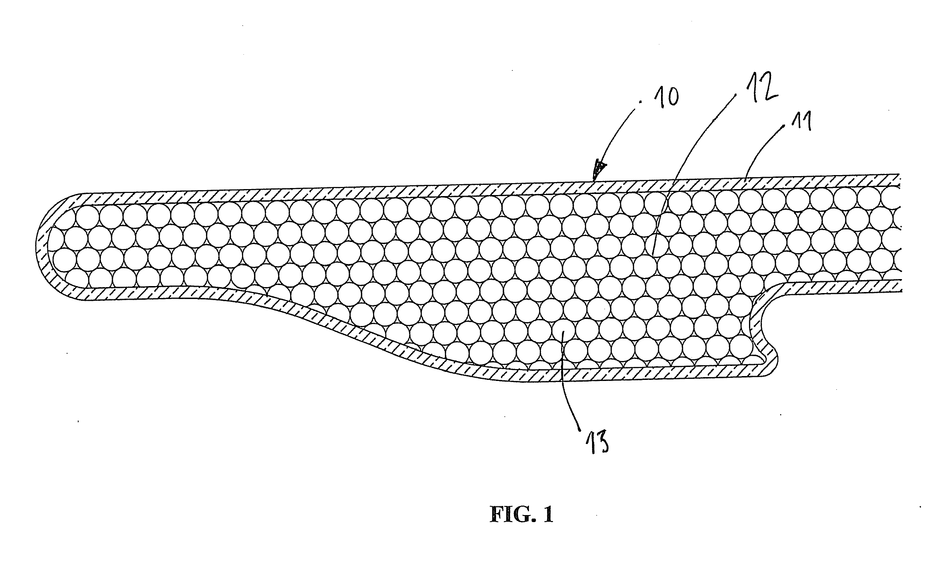

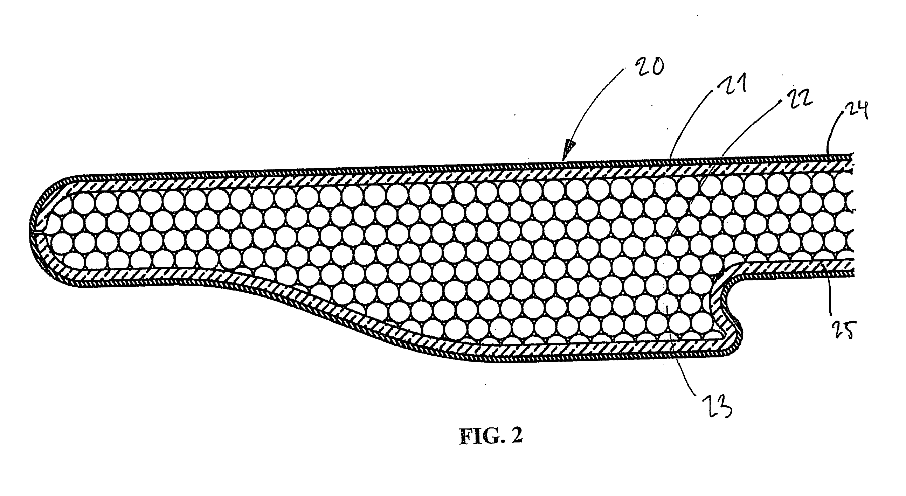

In figures 1 and 2 a first and a second cross sectional view of a part of a piece of furniture 10, 20 made of a first and a second embodiment respectively of the claimed structure are illustrated. The piece of furniture in figure 1 comprises an outer skin 11 moulded to the desired shape. The skin 11 is selected to provide the product with the desired appearance and features. The space inside the skin 11 is filled with an intermediate layer 12. The intermediate layer 12 comprises spherical elements 13 that are bounded together only in their contact areas with the adjacent spherical elements to three-dimensional mesh structure. In this embodiment of the intermediate layer 12 all spherical elements 13 have substantially the same diameter. An alternative embodiment of the invention would be to use spherical elements with different diameters. The use of spherical elements with different diameters could be advantageous if the shape of the product is complex since the use of differently sized spherical elements would make it easier to fill the entire space inside the surrounding skin completely since the smaller spherical elements would more easily fill narrow areas inside the skin 11.

The spherical elements 13 have a hollow or porous core, or a core made of material with low density. The core is surrounded by an exterior layer that provides a shell able to withstand pressure. The shell could for example be made of glass fibres bounded by epoxy. Other fibres and bounding agents could also be used as long as the surrounding shell is made of a material that provides a strong bounding to the adjacent spherical elements in the intermediate layer.

In the embodiment illustrated in figure 2 the skin 21 comprises two different layers. The first one is an outer layer 24 consisting of a foil that provides the product with the desired appearance and features, and the second one a reinforcement layer 25 that is bounded to the outer layer 21. The reinforcement layer 25 increases the structural strength of the product and reduces the risk that the shape of the spherical elements 23 in the intermediate layer 22 is transferred to the skin, called print-through, which may be devastating for the appearance of the product. Fibre types and type of fibre mat in the reinforcement layer 25 are for example selected depending on the desired structural strength of the product, the cost etc. The mat of fibres is either woven, non-woven or tufted. Woven mats provide a product with higher structural strength, while a tufted mat is more favourable in order to avoid print-through. Also in this embodiment of the intermediate layer 22 all spherical elements 23 have substantially the same diameter. An alternative embodiment of the invention would be to use spherical elements with different diameters. The use of spherical elements with different diameters will have the same advantages as described above.

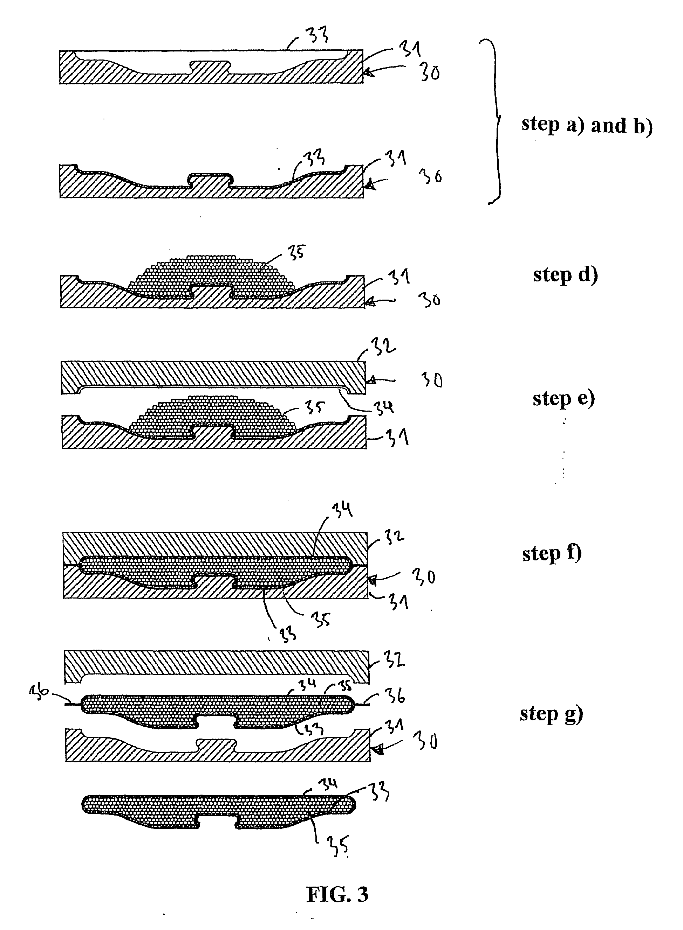

Figure 3 and 4 illustrates the different steps in two embodiments of a method for producing a product according to the present invention.

A product according to the claimed invention is produced in a mould 30 comprising at least two parts 31, 32 that, when brought together to the predetermined position in relation to each other, result in a product with the desired shape. In figure 3 and 4 different steps of the production method are disclosed.

The method comprises the steps:
- positioning and shaping a first skin 33, in a first part 31, of a mould 30;
- positioning and shaping a second skin 34 in a second part 32 of the mould 30;
- applying a layer of adhesive on spherical elements 35;
- introducing a predetermined quantity of spherical elements 35 covered by an adhesive into the first 31 or the second part 32 of the mould 30;
- closing the mould 30 by bringing the first 31 and the second part 32 of the mould 30 together to the relative position that ensures a product with the desired shape and an intermediate layer of spherical elements 35;
- heating the mould 30 to a predetermined temperature to cure the adhesive on the spherical elements 35 thereby bounding the spherical elements 35 in the intermediate layer together and adhering to the first 33 and the second skin 34;
- removing the final product from the mould (30).

In a first embodiment of the invention the skins 33, 34 comprises only one layer and the first two steps a, b of the method are performed simultaneously for the first 33 and the second skin 33 in the first 31 and the second 32 part of the mould 30. A skin 33, 34 is placed above each part of the mould in a substantially flat and stretched condition. The skins 33, 34 are then formed to the desired shape in the heated parts of the mould 30 by vacuum that is sucking air from the area underneath the skins 33, 34 in order to bring the skins into alignment with each part of the mould 30 that is provided with the desired form. Once the skins 33, 34 are properly formed in each part of the mould 30, a predetermined quantity of spherical elements 35 covered by a limited amount of adhesive is poured into the first 31 or the second part 32 of the mould 30. The first 31 and the second part 32 of the mould 30 is then brought together into the intended position relative to each other by applying a pressure that additionally forces the spherical elements 35 to spread within the space defined by the skins 33, 34 already in place within the first 31 and second part 32 of the mould 30. The adhesive surrounding the spheres 43 are then cured within the heated mould 30 until the spheres 35 in the intermediate layer are bounded together in their contact areas and the intermediate layer is bounded to the surrounding skins 33, 34. The quantity of the spherical elements 35 is determined to fill the space within the skins completely and generate an intermediate layer of spherical elements 35 bounded together in their contact areas to a mesh structure with a low density. Finally the parts of the mould 30 are separated and the product removed from the mould.

If the design requires that the skins 33, 34 are bounded together to enclose the intermediate layer completely, which is the case in figure 3 and 4, there might be residue material 36 at the joint between the first and the second skin. The residue material 36 may be removed after the product is removed from the mould by any conventional method, like for example machining.

In a second embodiment of the invention, one of the skins, or both, comprise more than one layer of material. The method is then adapted to this embodiment of the product by some additional steps that are performed on the skin, or skins, comprising the additional layer. In the modified method used in relation to skins comprising more than one layer, the first step is replaced by the step of positioning and shaping a foil on the relevant part of the mould in a substantially flat and stretched condition. The foil is then formed to the desired shape in the heated parts of the mould by vacuum that is used in order to suck the foil to alignment with the part of the mould. A reinforcement layer and / or a layer with a predetermined pattern are placed on the foil and a resin distributed over the layers. The resin is then cured and the different layers bounded together. The remaining steps are similar as in the embodiment described above.

If the skin comprises more than one layer, the reinforcement layer and / or the layer with a predetermined pattern or the layer of wood are preferably pre-shaped to the shape of the part of the mould to which they will be applied since the material in the reinforcement layer may be difficult to shape in the mould.

Of the overall time required for manufacturing of products by the methods described above the time fore curing of adhesive in the intermediate layer and resin that bound the different layers of the skin is a major part. In one embodiment of the method, in order to speed up the process and save time, the resin that bounds the different layers within the skin is only cured to about 90% before the spherical elements are introduced in the mould. The final curing of the resin takes place at the same time as the curing of the adhesive on the spherical elements in step f).

For some product, there are high requirements on the final product regarding strength and / or appearance which means that it is important that the space defined within the product is completely filled by the intermediate layer. However, most materials tend to shrink during curing and one embodiment of the invention, in order to compensate for such shrinking a material that expands when heated to a predetermined temperature is applied on the inside surface of at least a part of the skin before the first and the second part of the mould are brought together. The expanding material will, at the same time as the resin and adhesive are cured, expand and thereby compensate for the shrinking that occurs during the curing of the adhesive and the resin in step f) and thereby ensure that the space between the first and the second skin is filled by the spherical elements and the expanding material.

In a further embodiment of the invention the intermediate layer could be produced separately to the desired final shape before it is introduced between the skins in the mould. This embodiment reduces the overall cycle time for manufacturing considerably since several steps of the method are eliminated.

While two presently preferred embodiments of a structure according the invention have been described herein, it is to be understood that the invention is not so limited but covers and includes any and all modifications and variations that are encompassed by the following claims.

### EXAMPLE

One example of a piece of furniture comprising the inventive structure is a table top that will be described in further detail. The table top is made of the claimed multi layered structure in which the top and bottom surface of the table top are a PMMA-foil (polymethyl methacrylate - foil) with a thickness of about 0,25 mm. Inside the PMMA foil, a reinforcement layer of tufted polyester is bounded to the foil by an epoxi resin. In order to ensure sufficient bounding strength between the layers the inside surface of the foil is covered by printing ink type F3 delivered by PRÖLL AG. The table top furthermore comprises an intermediate layer placed between the upper and lower skin. The intermediate layer comprises EC-COSPHERES® that are spherical elements delivered and sold by TRELLEBORG EMERSON & CUMING, Inc. The spherical elements have diameters within the range of 1,5 to 6 mm and are bounded together at their contact surfaces by an epoxi adhesive to a three-dimensional mesh structure.

The table top was produced by the claimed method, in which a mould comprising two parts, one that provided the desired shape of top surface of the table top and a second part that provided the bottom side of the table top. First the PMMA - foil was positioned and shaped simultaneously in each part of the mould and the printing ink applied on the inside surface of the foils. Next, the reinforcement layer, pre-shaped into the desired shape, was positioned in each part of the mould and bounded to the adjacent foil by an epoxy resin. A layer of adhesive was simultaneously applied on the spherical elements and a predetermined quantity of the spherical elements introduced in one of the parts of the mould. Once the all spherical elements were introduced in the selected part of the mould, the mould was closed and the first and the second part of the mould brought together and a pressure applied to spread the spherical elements within the space defined between the surrounding layers. The mould was then heated to a predetermined temperature to cure the adhesive on the spherical elements thereby bounding the spherical elements in the intermediate layer together and adhering to the first and the second skin. Finally, the table top was removed from the mould. The top and bottom skin were joined together around the surrounding edge of the table top to enclose the intermediate layer completely.

## Claims

1. Multi-layered structure (10; 20) comprising a first and a second continuous outer skin (11; 21), and an intermediate layer (12; 22) adhered to the first and second outer skin (11; 21), said intermediate layer (12; 22) comprises substantially spherical elements (13; 23) arranged between the first and the second outer skin (11; 21) **characterised in that** the spherical elements (13; 23) at their contact surfaces are bounded to the adjacent spherical element or elements.

2. Multi-layered structure according to claim 1, **characterised in that** the intermediate layer thickness is between 1 - 1000 mm.

3. Multi-layered structure according to claim 1 or 2, **characterised in that** the spherical elements (13; 23) has an either hollow core, a porous core, or a core made of a material with a density lower than 300 kg/m3 and that said core is surrounded by an exterior layer that provides a shell able to withstand pressure.

4. Multi-layered structure according to anyone of the previous claims, **characterised in that** the spherical elements (13; 23) have a diameter of at least 1 mm, and preferably at least 2 mm.

5. Multi-layered structure according to claim 4, **characterised in that** the spherical elements (13; 23) have a diameter that is equal to or less than the minimum intermediate layer thickness.

6. Multi-layered structure according to anyone of the previous claims, **characterised in that** the spherical elements (13; 23) in the intermediate layer (12; 22) have different diameters.

7. Multi-layered structure according to anyone of the previous claims, **characterised in that** the first and / or the second skin (21) comprises an outer foil (24) of a thermoplastic film or a multilayer film that provides the desired surface appearance, such as roughness, colour, brightness and resistance to wear and scratches.

8. Multi-layered structure according to claim 7, **characterised in that** the foil (24) is transparent and a layer with a predetermined pattern, or a layer of wood, is placed inside the foil (24) to give the structure the desired appearance.

9. Multi-layered structure according to claim 7 or 8, **characterised in that** the first and / or the second skin (21) further comprises a reinforcement layer (25) of a woven or non-woven mat of fibres or a tufted mat of fibres placed inside the foil (24) to increase the strength of the skin and the structure.

10. Multi-layered structure according to claim 9, **characterised in that** the reinforcement layer (25) is made of fibres of natural fibres, synthetic fibres, ceramic fibres, metal fibres or structural fibres such as carbon or aramid.

11. Multi-layered structure according to anyone of the previous claims, **characterised in that** some of the spherical elements are spherical elements that not are able to withstand the same pressure as the other spherical elements.

12. A product, such as a piece of furniture, comprising a multi-layered structure (10; 20) according to anyone of claim 1-11.

13. Product according to claim 12, **characterised in that** the first and / or the second skin (11; 21) has a curved shape.

14. Product according to claim 12 or 13, **characterised in that** the intermediate layer (12; 22) has different thickness in different parts of the product.

15. Product according anyone of claims 12 - 14, **characterised in that** the first and the second skin are bounded together to enclose the intermediate layer (12; 22).

16. Method for producing a product according to anyone of claim 12-15, comprising the steps:
a) positioning and shaping a first skin (33) in a first part (31) of a mould (30);
b) positioning and shaping a second skin (34) in a second part (32) of the mould (30);
c) applying a layer of adhesive on spherical elements (35);
d) introducing a predetermined quantity of spherical elements (35) covered by the adhesive into the first (31) or the second part (32) of the mould (30);
e) closing the mould (30) by bringing the first (31) and the second part (32) of the mould (30) together to the relative position that ensures a product with the desired shape and an intermediate layer of spherical elements (35); and
f) heating the mould (30) to a predetermined temperature to cure the adhesive on the spherical elements (35) thereby bounding the spherical elements (35) in the intermediate layer together and adhering to the first (33) and the second skin (34); and
g) removing the final product from the mould (30).

17. Method according to the previous claim, wherein step a) and / or step b), when the skin comprises more than one layer, are replaced by the steps of position and shaping a foil, a reinforcement layer and / or a layer with a predetermined pattern in one part of a mould; distribute a resin over the layers and cure the resin to bound the different layers together.

18. Method according to claim 17, wherein the resin is only cured to about 90% and the final curing takes place together with the curing of the adhesive on the spherical elements (35) in step f).

19. Method according to anyone of claims 16 - 18, wherein a material, that expands when heated to a predetermined temperature, is applied on the inside surface of at least a part of the skin before the first (31) and the second part (32) of the mould (30) are brought together to compensate for shrinking that may occur during the curing of the adhesive and the resin in step f) and thereby ensure that the space between the first and the second skin is filled by the spherical elements (35) and the expanding material.
